# EUROPEAN PATENT APPLICATION

(11) **EP 0 683 553 A1**
(43) Date of publication of application: **22.11.1995**
(21) Application number: 94830465.4
(22) Date of filing: 30.09.1994
(51) Int. Cl.: H02G 3/04, E04F 17/08

(54) **A modular apparatus for combined dispensing of fluids, current to electrical appliances, communication systems and the like**

(30) Priority: 19.04.1994 IT MI940287 U
(71) Applicant: TEKNO-LIT DI ZUCCHINI E LAZZARONI S.r.l., I-25014 Castenedolo (Brescia) (IT)
(72) Inventor: Lazzaroni, Mauro, Rezzato (Brescia) (IT); Zucchini, Monica, Brescia (IT)
(74) Representative: Righetti, Giuseppe

(57) **Abstract**

The modular apparatus (1) for combined dispensing of fluids, electric current to appliances, communication systems and the likes comprises a shelf-bracket (21) for supporting fluid pipes and box (2) associable to the shelf-bracket (21) in such a way as to realize a channel (20a) within which the fluid pipes (20) can be housed which is external to and separate from a longitudinal cavity (7a, 7b) afforded inside the box (2).

## Description

The invention relates to a modular apparatus for combined dispensing of services, such as fluids, electrical current, communication systems and the like, of the type comprising a prevalently longitudinally-developing body exhibiting a main body and at least one closing panel which together afford an internal longitudinal cavity.

Workplaces, homes and care establishments such as hospitals, clinics and rest homes for the aged must have compact apparatus for distributing electricity, telephone, bleeper or other communication systems, as well as in many cases medical gases or other fluids. This need is often satisfied by collecting up cables, pipes and various devices and locating them inside support structures or channels affording cavities and longitudinal seats, which are applied to ceilings, walls, or below shelves or cupboards. By using such conduits and channels, it is not necessary to perform major alterations to walls, and what is more, all check and replacement operations become much easier and therefore faster to carry out.

Furthermore, the principle of providing a single apparatus dispensing all of the services grants greater flexibility in location as well as a rational installation of the various electrical attachments, gas ducts, keyboards, acoustic equipment, light attachments etc.

The structures disclosed in the prior art, summarily described above, though practical and functional, still present certain drawbacks, one of the most important of which is that they do not conform to safety standards in some countries, while another of which is that they are not simple to install.

In practice, the pipes carrying fluids, such as medical gases, though properly insulated, still share the same longitudinal cavities in the distribution apparatus as, say, normal- or low-tension electrical cables, so that in fact they are not truly adequately separated therefrom in special dedicated areas.

Furthermore, during installation, work carried out on the pipes and on the electrical components, which are as above-mentioned contained in a single apparatus, may give rise to confusion over what exactly is to be installed first, so that the actual specialists performing the installation may find themselves interfering with each other's work.

The invention, therefore, proposes to overcome the above-described drawbacks by providing a modular apparatus for clearly separating a channelling area for the passage of fluid-carrying pipes from the distribution zones of all the other appliances, and in particular electrical appliances.

A further important aim of the invention is to provide an apparatus able to obviate interference problems among the various installation specialists.

The above aims are attained by a modular apparatus for integrated distribution of fluids, electrical applications, communication systems and the like which is characterised in that it comprises a shelf bracket fixable to a supporting wall and provided with means for supporting pipes for fluids, and boxes for outlets of the fluids, and which is also characterised in that the apparatus comprises a single external box which is associable to the shelf-bracket such as to provide a channel for the fluid pipes which is external of and segregated from a longitudinal cavity.

Further characteristics and advantages of the present invention will better emerge from the detailed description that follows, of an embodiment of the invention, illustrated in the form of a non-limiting example in the accompanying drawings, in which:
figure 1 is a transversal section of an apparatus according to the invention, applied on a supporting wall; and
figures 2, 3 and 4 show successive operative phases for installing the apparatus illustrated in figure 1.

With reference to the figures, the modular apparatus is denoted in its entirety by 1. It comprises an external box 2 which develops longitudinally and which comprises a principal body 3 subdivided, for example, into a central section 3a and two adjacent half-bodies 3b and 3c. Covers 5a and 5b are rotatably kinematically constrained to the half-bodies 3b and 3c by a turning pair 4a and 4b.

The covers 5a and 5b exhibit snap-fasteners 6a and 6b in order to be easily removable from the half-bodies 3b and 3c, for example by levering with a screw-driver, and to allow access to the inside of longitudinal cavities 7a and 7b formed by the covers 5a and 5b and the half-bodies 3b and 3c.

In the box there are numerous longitudinal seats, variously shaped such as to house cables and various devices, according to needs.

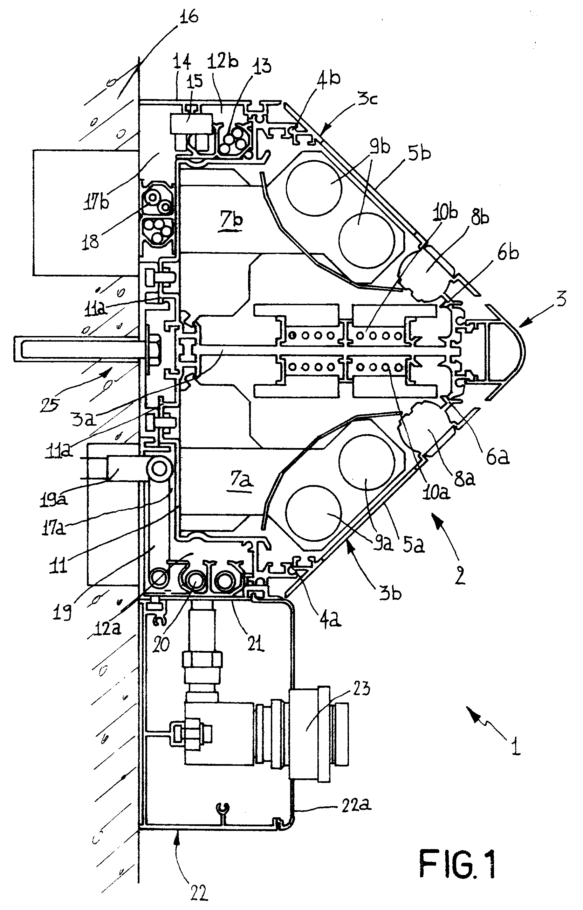

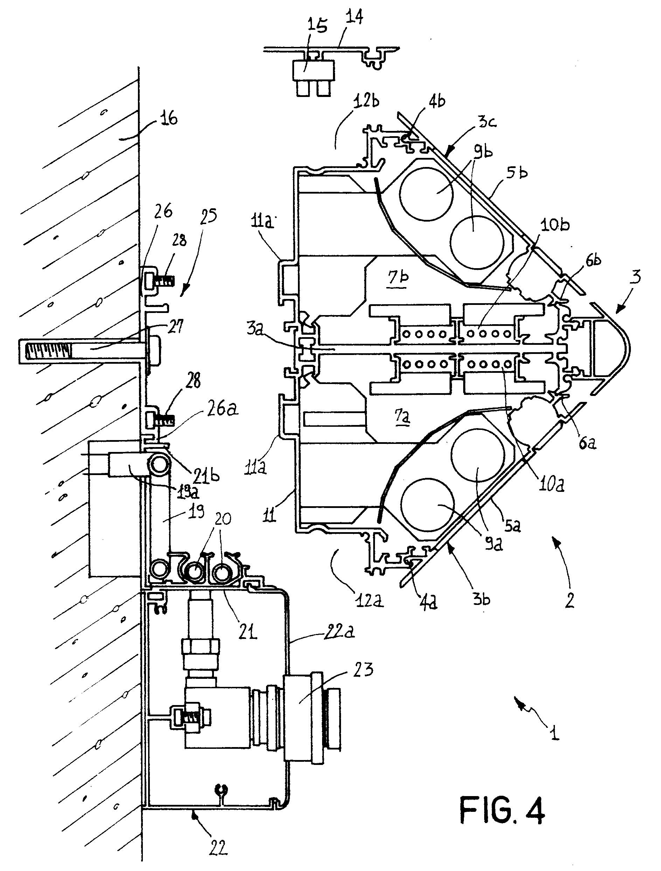

Purely by way of example, the covers 5a and 5b incorporate chambers 8a and 8b for low-tension electrical wires, as well as housings for neon lights 9a and 9b, while the central section 3a exhibits sheaths 10a and 10b for use with electrical current sourcing from the municipal electrical supply. Advantageously the half-bodies 3b and 3c of the box 2 exhibit a wall 11 exhibiting means for attaching the apparatus to a wall in a room,, which wall 11 is externally and terminally provided with recessed zones 12a and 12b (see figures 1 and 4) modelled such as to afford chambers for housing cables and pipes in locations which are completely external to and separate from the longitudinal cavities 7a and 7b of the box.

For example, in figure 1 recess 12b houses electric cables 13 and is closed by a small cover 14 internally provided with a terminal block 15. The wall 11 exhibits squared projections 11a which are principally usable for hooking the apparatus to a supporting wall 16 in a room, but which also create, between the wall 11 of the apparatus and the room wall 16, further chambers 17a and 17b, completely isolated from the inside of the apparatus, which can be used for arranging telephone lines 18 or attachments 19 for fluid pipes 20.

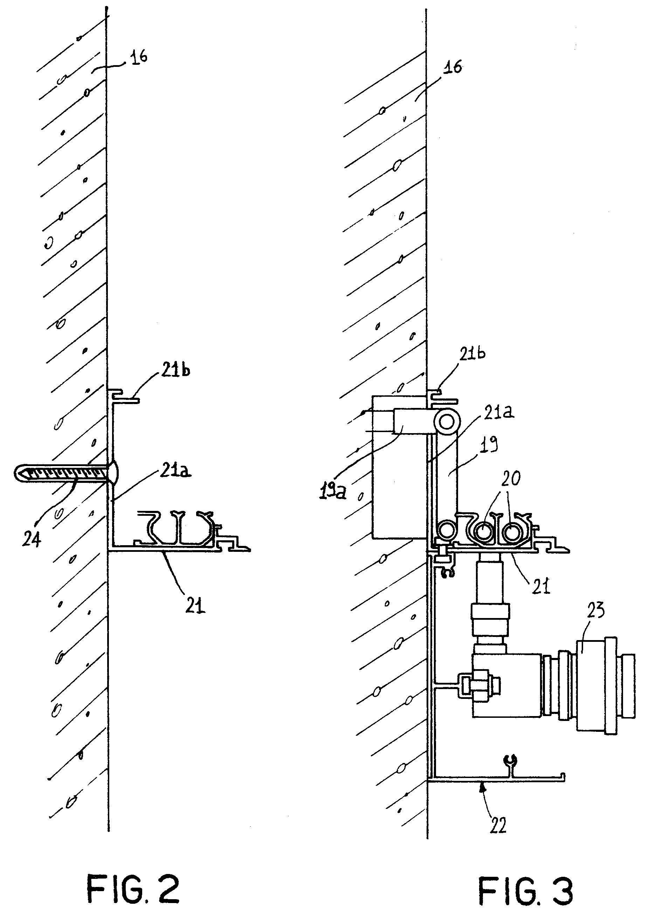

The apparatus 1 comprises a shelf-bracket 21 (best seen in figure 2) for supporting one or more fluid-carrying pipes 20 (carrying, say, gases for medical use) and boxes 22 for housing ducts 23 dispensing the fluids. Figure 4 shows the boxes 22 exhibiting covers 22a.

The shelf-bracket 21 exhibits a portion 21a usable for fixing the bracket 21 to a wall. Screw anchors 24 will probably be used for this purpose. The portion 21a is height-adjustable, so that the shelf-bracket 21 can be positioned at various heights in relation to the attachment 19a of the fluid pipe 20. The shelf-bracket 21 is conformed such as to associate with the principal body 3 at the recessed zone 12a and the separate chamber of the bracket 21. Thus a channel is created in which the fluid pipes 20 can run and be connected up with their attachments 19, the whole zone being external to and separate from the longitudinal cavities 7a and 7b of the box 2. In other words, the channel 20a comprises, as can be seen in figure 1, the recessed zone 20a and the isolated chamber 17a.

The box 2 can be constrained to the supporting wall 16 by screw anchors 27 combining with brackets 26 to form an anchor assembly 25, and also by using connecting elements 28 such as bolts to engage in the square projections 11a of the wall 11.

The brackets 26 exhibit, at ends thereof, coupling recesses 26a for engaging with complementarily-shaped attachments 21b on the shelf-bracket 21, such that the bracket 26 and the box 2 can be precisely reciprocally positioned.

The modular apparatus is installed as follows.

First, the shelf-bracket 21 is fixed to the wall 16 (see figure 2). The fluid pipe 20 and attachment 19 installer, while carrying out those operations, will also connect the boxes 22 and the ducts 23 (see figure 3). These first operations will take place in the open, or at least where the heat generated by the welding operation will cause no problems.

Then, after having positioned the brackets 26 by hooking them to the coupling recesses 26a on the ends of the attachments 21b of the shelf-bracket 21, the brackets themselves will be constrained to the wall 16 by means of the screw anchors 27. The box 22 is then attached, at the two projections 11a and by means of the bolts 28, to the brackets 26.

Thus the recessed zone 12a of the principal body 3 and the shelf-bracket 21 combine to afford a closed channel which is external to the box 2, and it is in this channel that the fluid pipes 20 and their attachments 19 will be housed. Once this operation has been completed, the electrician can begin his work on the apparatus 1.

It is important to underline how the structure of the apparatus 1 according to the invention imposes order on the specialists' operations during installation, so that no interference can occur in relation to the order of their specific tasks.

## Claims

1. A modular apparatus for combined dispensing of fluids, electric current to appliances, communication systems and the like, comprising a box (2) which develops prevalently longitudinally and which exhibits a principal body (3) and at least one cover (5a, 5b), said box (2) and said at least one cover (5a, 5b) combining to afford at least one longitudinal internal cavity (7a, 7b), characterised in that it comprises a shelf-bracket (21) constrainable to a supporting wall (16) and predisposed to support fluid pipes (20) and boxes (22) for housing ducts (23) dispensing fluids, and further characterised in that the box (2) is associable to the shelf-bracket (21) in such a way that a channel (20a) is afforded therebetween, which channel (20a) is external to and separate from the at least one longitudinal cavity (7a, 7b), and along which channel (20a) the fluid pipes (20) can run.

2. An apparatus as in claim 1, characterised in that the box (2) comprises a wall (11) for constraining the box (2) to the supporting wall (16); said wall (11) being externally provided with recessed zones (12a, 12b) functioning as housing chambers which are completely isolated from the longitudinal cavities (7a, 7b).

3. An apparatus as in claim 2, characterised in that the channel (20a) comprises at least one recessed zone (12a) of said recessed zones (12a, 12b), and at least one isolated chamber (17a, 17b) situated between the wall (11) and the supporting wall (16).

4. An apparatus as in claim 1, wherein the shelf-bracket (21) exhibits at least one portion (21a) destined to be used for constraining the shelf-bracket (21) to the supporting wall (16).

5. An apparatus as in claim 1, wherein means for constraining (25) the box (2) to the supporting wall (16) comprise brackets (26) fixable to said supporting wall (16) which are further constrainable to the shelf-bracket (21), said brackets (26) being provided with connecting elements (28) predisposed to engage with projections (11a) on the wall (11).
